# EUROPEAN PATENT APPLICATION

(11) **EP 0 654 674 A2**
(43) Date of publication of application: **24.05.1995**
(21) Application number: 94308514.2
(22) Date of filing: 17.11.1994
(51) Int. Cl.: G01R 31/02, H04Q 1/14, H04M 3/30

(54) **Cable management system with service and user line testing**

(30) Priority: 22.11.1993 US 156179; 26.08.1994 US 296947
(71) Applicant: THE WHITAKER CORPORATION, Wilmington, Delaware 19808 (US)
(72) Inventor: Wise, James Henry, Palmyra, Pennsylvania 17078 (US)
(74) Representative: Warren, Keith Stanley

(57) **Abstract**

A cable management system provides routing of wired services between service lines (16) and user lines (18). Each service line (16) enters the cable management system at a service termination unit circuit card (22) which also holds a portion of a crosspoint switch matrix. Each user line (18) enters the system at a line termination unit circuit card (20). The service termination unit circuit cards (22) are all mounted to connectors (36) on a first side of a centerplane board (24) and the line termination unit circuit cards (20) are mounted to connectors (36) on the other side of the centerplane board (24). Pins (37) extending through the centerplane board (24) interconnect the connectors (36,37) on the opposed sides of the centerplane board (24) so that any service line (16) can be connected to any user line (18). A system controller card (26) mounted to the centerplane board (24) communicates with the circuit cards via a bus on the centerplane board (24). Each of the termination unit circuit cards (22) has a test port connector (204) for communication with a line tester, and a switch bank (206) for selectively connecting each of the lines on that card (22) to the test port connector (204). The line tester may either be a handheld unit or be permanently installed as part of the cable management system.

## Description

This invention relates to a cable management system which provides routing of telephony, low and high speed data, power and video, between service lines and user lines under computer control and, more particularly, to such a system wherein individual testing of the user and service lines can be effected in a single-ended manner from the cable management system without disconnecting any of the lines from the cable management system.

When wiring a commercial building, it is conventional that all of the services carried by wire, such as telephony, low and high speed data, power and video, enter the building for termination at respective patch panels. The patch panels are typically located within wiring closets and include a first array of terminations for the service lines which enter the building and a second array of terminations for the user lines which extend within the building to various user stations. Within each patch panel, the connections between the service lines and the user lines are made manually via jumper wires extending between the first array of terminations and the second array of terminations. In an ideal situation, records would be maintained as to where each wire goes within the building and to what it is connected. However, since the real world is not ideal, such records are not always properly maintained. In addition, wires are often tagged at the patch panels and the tags are lost or become outdated because of lack of updating. Therefore, when a technician is given a service order to add, move or change a connection, the technician must first determine exactly which physical wires are involved. This has proven to be a very time consuming and labor intensive chore. It has been proposed to provide a cable management system with automatic record keeping capability.

The proposed cable management system is interposed between a plurality of service lines and a plurality of user lines and includes a plurality of line termination unit circuit cards which provide connections to the user lines and a plurality of service termination unit circuit cards which provide connections to the service lines. Controllable switching means are coupled between the terminations to the user lines and the service lines for selectively providing physical electrical connections between selected ones of the service lines and selected ones of the user lines. A controller is provided to control the switching means to selectively make and open connections between the service lines and the user lines in accordance with received commands, the controller having a memory in which is stored a map of the connections made through the switching means. A management station is provided for issuing commands to the controller, the commands including a connect command to make a physical electrical connection through the switching means between a specified service line and a specified user line, and a disconnect command to open a physical electrical connection through the switching means between one or more specified service lines and one or more specified user lines.

In this cable management system, there is a centerplane board which has a first plurality of card edge connectors on a first side arranged in a first parallel array and a second plurality of card edge connectors on the other side arranged in a second parallel array orthogonal to the first parallel array. The first and second pluralities of card edge connectors are electrically interconnected through the centerplane board. The switching means are mounted on the service termination unit circuit cards and these cards are installed in the card edge connectors on the first side of the centerplane board. The line termination unit circuit cards are installed in the card edge connectors on the other side of the centerplane board. Accordingly, any one or more of the plurality of service lines can be connected to any one or more of the plurality of user lines through the switching means. The controller is mounted on a circuit card and installed in one of the card edge connectors on the first side of the centerplane board. A plurality of conductive bus lines are disposed on the centerplane board and are electrically interconnected to all the card edge connectors on both sides of the centerplane board. A respective transceiver coupled to the bus lines is provided on each of the controller circuit card, the service termination unit circuit cards and the line termination unit circuit cards for effecting communications therebetween over the bus lines.

In such a system, if the system operator is notified of a problem on a particular user line, the operator may not be able to determine whether the problem is with the line itself or with the equipment connected to the line. This may result in two separate service technicians being called - one for the line and one for the equipment. It would be desirable for the system operator to be able to isolate the problem so that only the appropriate service technician is called. It is therefore an object of the present invention to provide an arrangement by means of which tests can be performed on a user line without requiring the intervention of a service technician.

In a commercial building, the system operator, rather than the service provider, is responsible for maintaining all the wiring which is on the user side of where the service provider terminates its wiring at the building (i.e., at the line of demarcation). It would be desirable for the system operator to have the ability to test the service lines between the line of demarcation and the cable management system. It would also be desirable for such testing to be effected remotely under the control of the management station. It is therefore another object of the present invention to provide an arrangement by means of which tests can be performed on the service lines connected to a cable management system of the type described under the control of the management station.

The aforedescribed cable management system includes a matrix of crosspoint switches which can affect line evaluation results if the switch matrix is interposed between the line testing equipment and the line being tested. It is therefore still another object of the present invention to provide a user and service line testing arrangement of the type described where the line testing equipment is connectable to a selected line without the switch matrix being interposed therebetween.

It is a further object of the present invention to provide a user and service line testing arrangement of the type described wherein the line testing equipment is installed as part of the cable management system so that line testing can be controlled from the management station without requiring a service technician to directly access the lines.

It is yet another object of the present invention to provide a user and service line testing arrangement of the type described wherein the line testing equipment is separate from the cable management system but is connectable to the termination unit circuit card corresponding to a user or service line which is to be tested.

The foregoing and additional objects of the present invention are attained in accordance with the principles of this invention in a cable management system interposed between a plurality of service lines and a plurality of user lines and including a plurality of service termination unit circuit cards each connectable to a first predetermined number of respective ones of the plurality of service lines, a plurality of line termination unit circuit cards each connectable to a second predetermined number of respective ones of the plurality of user lines and connecting means for connecting each of the plurality of service termination unit circuit cards to all of the plurality of line termination unit circuit cards. Each of the line termination unit circuit cards includes a respective port connector for each of the user lines connected to that line termination unit circuit card and a respective line circuit path between each of the port connectors and the connecting means. Each of the service termination unit circuit cards includes a respective port connector for each of the service lines connected to that service termination unit circuit card, a respective service line circuit path between each of the service line port connectors and the connecting means, and switching means for selectively connecting one of the plurality of service lines connected to that service termination unit circuit card to one of the plurality of user lines. The present invention provides an arrangement for testing a selected one of the plurality of user and service lines. The inventive arrangement comprises testing means having an output port for evaluating a predetermined characteristic of a line connected to the output port and a test port connector on each of the line and service termination unit circuit cards for receiving a connection to the testing means output port. On each of the line and service termination unit circuit cards, there is provided a switch means connected to the respective test port connector, line port connectors and the line circuit paths for selectively connecting each of the line port connectors either to the test port connector or to its respective line circuit path. There is also provided means for controlling the switch means on a selected one of the line and service termination unit circuit cards to provide a path between a selected one of the lines and the test port connector on the selected termination unit circuit card.

The connecting means of the cable management system includes a centerplane board, a first plurality of card edge connectors on a first side of the centerplane board arranged in a first parallel array, a second plurality of card edge connectors on the other side of the centerplane board arranged in a second parallel array orthogonal to the first parallel array, and means for electrically connecting each of the first plurality of card edge connectors to each of the second plurality of card edge connectors through the centerplane board. Each of the plurality of service termination unit circuit cards is mounted to a respective one of the first plurality of card edge connectors and each of the plurality of line termination unit circuit cards is mounted to a respective one of the second plurality of card edge connectors. In accordance with an aspect of this invention, the testing means is supported on a line test card mounted on the centerplane board. The line test card includes a plurality of connection ports each corresponding to a respective one of the line and service termination unit circuit cards and switching means for selectively connecting the testing means output port to a selected one of the connection ports. The inventive arrangement further includes test cable means for connecting each of the line test card connection ports with a respective one of the line and service termination unit circuit card test port connectors.

In accordance with another aspect of this invention, the switch means on each of the termination unit circuit cards includes a plurality of individual switches, all of the individual switches having a common connection to the test port connector on that termination unit circuit card. Each of the individual switches is further connected to a respective one of the line port connectors and a respective one of the line circuit paths, and each of the individual switches is operative to connect its respective line port connector either to its respective line circuit path or to the test port connector.

In accordance with a further aspect of this invention, the testing means comprises a handheld unit.

A tester in a cable management system comprising, multiple communications service lines interconnected to multiple communications user lines, multiple STU (service termination unit) cards, service line port connectors on respective STU cards connected to the respective multiple service lines, multiple LTU (line termination unit) cards, a connecting unit interconnecting each of the STU cards to every one of the LTU cards, user line port connectors on the LTU cards connected by the connecting unit to each of the STU cards, the user line port connectors being adapted to be connected to respective multiple user lines, switches on each STU card each switch connecting one of the respective multiple service lines selectively to one of among many of the user line port connectors a service line tester, test port connectors on respective STU cards connected to the service line tester, and selectively actuated switches on respective STU cards connecting respective test port connectors selectively to one of the service line port connectors on the respective STU cards.

Embodiments of the present invention will now be described by way of example with reference to the accompanying drawings in which like elements in different figures thereof are identified by the same reference numeral and wherein:
FIGURE 1 is a conceptual drawing showing the proposed cable management system discussed above;
FIGURE 2 is a block diagram of the cable management system of FIG. 1;
FIGURE 3A schematically depicts the rear of the interior of the cable management system enclosure showing the service termination unit circuit cards, the line test card and the controller circuit cards;
FIGURE 3B schematically depicts the front of the interior of the cable management system enclosure showing the line termination unit circuit cards;
FIGURE 3C shows a first side of the centerplane board, which side is adapted to mount the service termination unit circuit cards, the line test card and the controller circuit cards;
FIGURE 3D shows the other side of the centerplane board, which side is adapted to mount the line termination unit circuit cards;
FIGURE 3E schematically illustrates orthogonal edge connections of a service termination unit circuit card and a line termination unit circuit card to the centerplane board;
FIGURE 4 is a block diagram of an illustrative controller for the cable management system of FIG 2;
FIGURE 5 is a block diagram showing the circuitry on an illustrative service termination unit circuit card for the cable management system of FIG. 2 according to an embodiment of this invention;
FIGURE 6 is a block diagram showing the circuitry on an illustrative line termination unit circuit card for the cable management system of FIG. 2 according to an embodiment of this invention;
FIGURE 7 is a block diagram showing circuitry on the line test card for the cable management system of FIG. 2 according to one of the embodiments of this invention;
FIGURE 8 illustrates circuitry for the selective switching of the user lines on the line termination unit circuit card of FIG. 6; and
FIGURE 9 illustrates circuitry for the selective switching of the service lines on the service termination unit circuit card of FIG. 5.

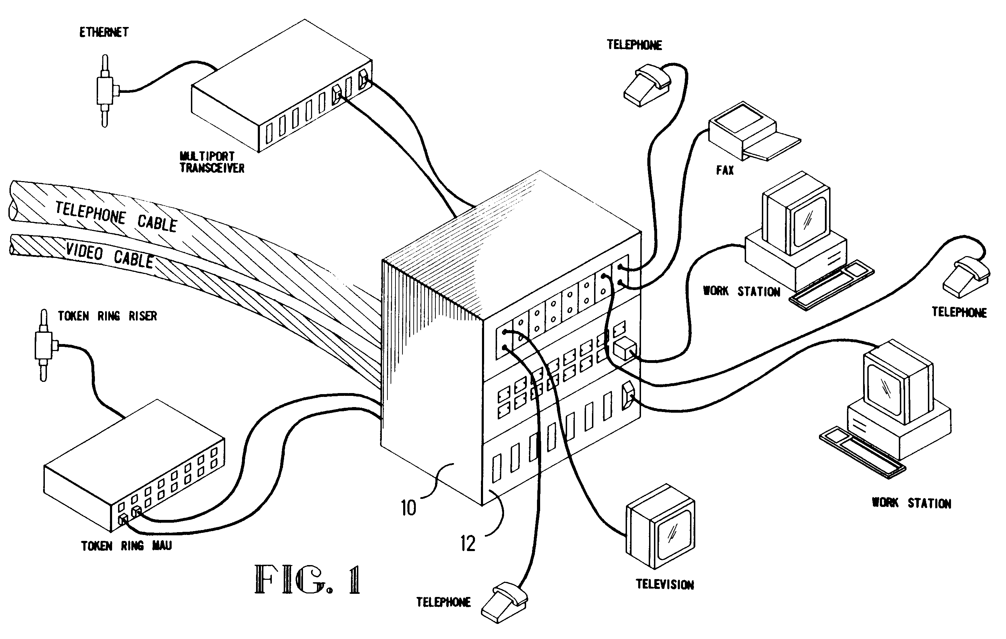

As shown in FIG. 1, the cable management system with which the present invention is concerned is contained within an enclosure 10 illustrated as having media-specific connectors on both its front surface 12 and its rear surface (not shown). The cable management system within the enclosure 10 serves as a flexible electronic patching, or cross-connecting, hub for automated cable management of communications circuits. Various services, such as LAN'S, telephone, computer I/O channels and peripherals, and video distribution links are connected to the cable management system through media-specific connectors on the rear surface of the enclosure 10. Typically, these will be aggregated multi-pair cables or high bandwidth cables, such as coax and fiber, common in riser and horizontal distribution subsystems. As shown in FIG. 1, such services include ethernet, telephone, video and token ring.

Matrix switch modules are installed within the enclosure 10. Media-specific connectors corresponding to the media selected for each user's work station subsystem wiring are installed on the front surface 12 and have cables which are attached and then run to the user's location. Thus, as shown in FIG. 1, at the user's location there may be one or more telephones, computer work stations, facsimile machines, or television sets. Once wired in this fashion, each user can be electronically connected to any combination of services that is required. All future changes in each user's service complement can be accomplished electronically.

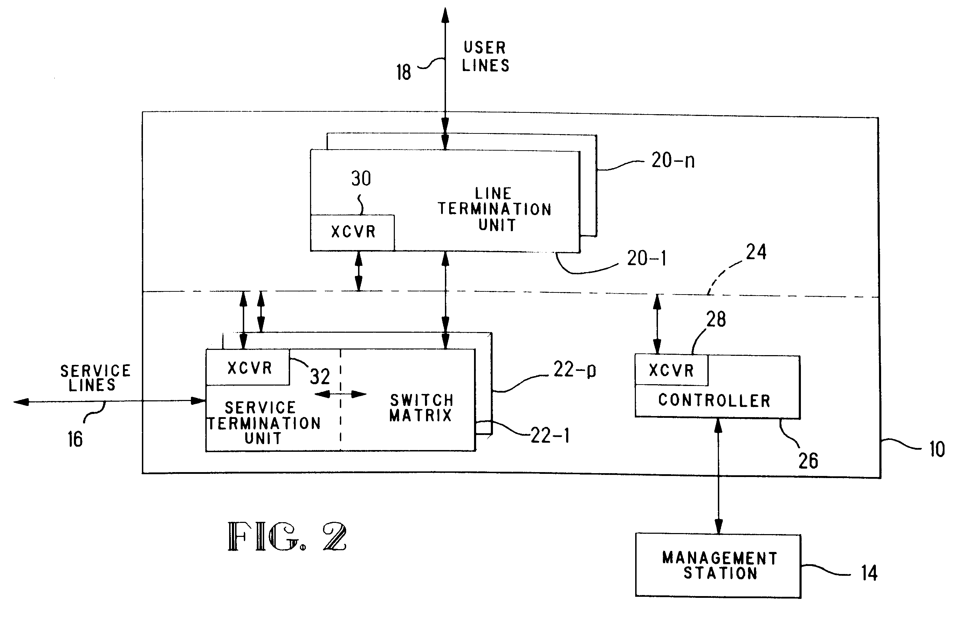

The cable management system within the enclosure 10 maintains a data base of the location, source and destination for each cable. The system is configured by a management station 14 (FIG. 2). As shown in FIG. 2, the cable management system contained within the enclosure 10 is connected to the service lines 16, which may be telephone lines, video lines, etc., which come to the system from the various service providers. The cable management system is also connected to the user lines 18 which extend to various user locations. The user lines 18 are each connected to a respective port on one of a plurality of line termination unit circuit cards 20-1,..., 20-n. Similarly, the service lines 16 are each connected to a respective port on one of a plurality of service termination unit circuit cards 22-1, ... , 22-p.

The switching matrix for connecting the service lines 16 to the user lines 18 is distributed among the service termination unit circuit cards 22-1,..., 22-p so that each of the service termination unit circuit cards 22-1,..., 22-p includes thereon a plurality of service termination units for connection to a group of the service lines 16 and a portion of the overall switch matrix. The line termination unit circuit cards 20-1,..., 20-n and the service termination unit circuit cards 22-1,..., 22-p are installed on opposite sides of a centerplane board 24, represented schematically in FIG. 2 by a dot-dash line, in such a manner that every line termination unit circuit card 20-1,..., 20-n is connected to the switch matrix portion of every service termination unit circuit card 22-1,..., 22-p, as will be described in full detail hereinafter.

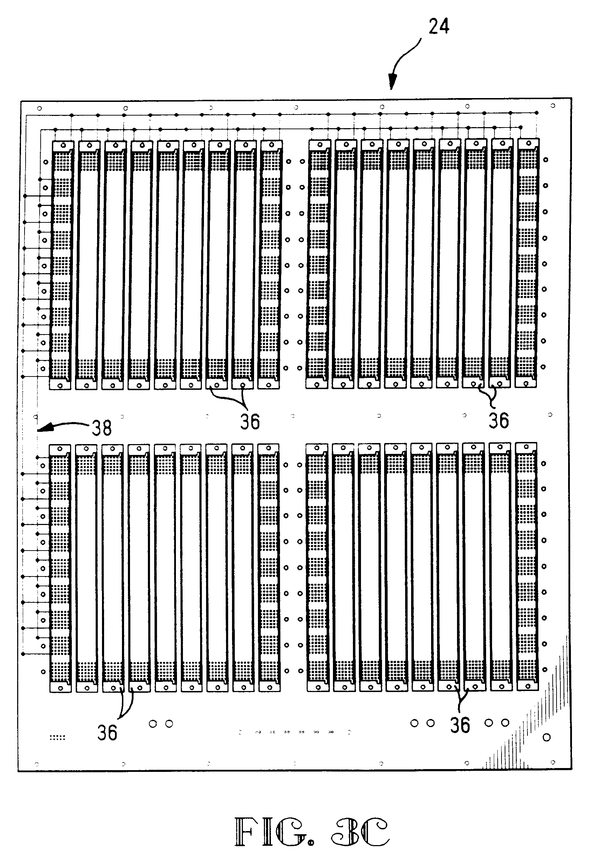

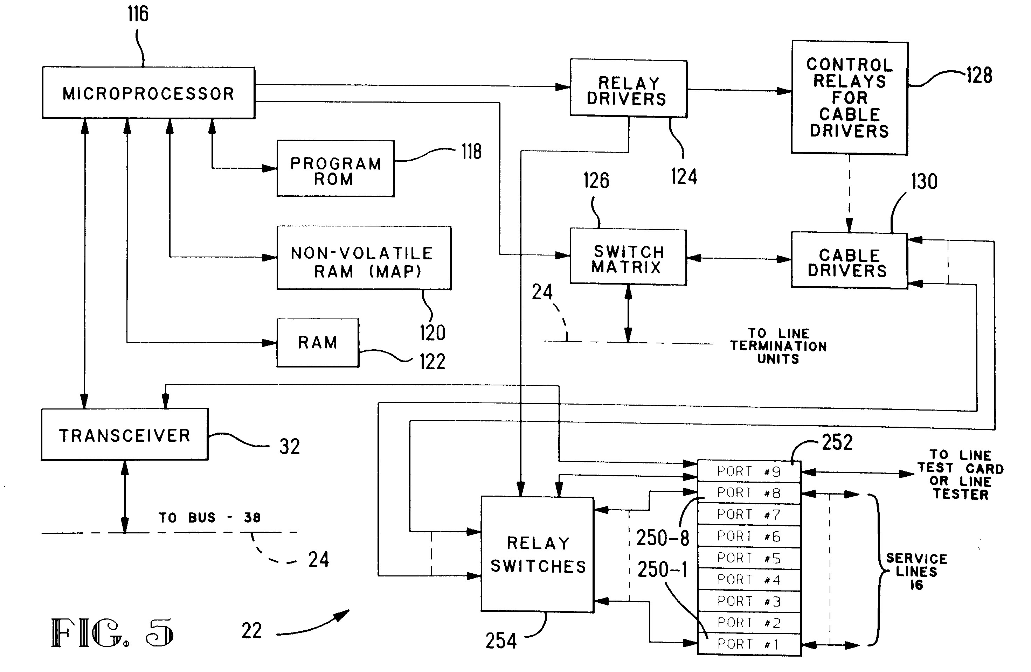

Within the enclosure 10, there is also provided a controller circuit card 26 which is mounted to the centerplane board 24 on the same side thereof as the service termination unit circuit cards 22-1,..., 22-p. The controller circuit card 26 is connected to the management station 14 in a suitable manner, such as through an RS-232 link or a modem. To effect communications between the controller circuit card 26, the line termination unit circuit cards 20-1,..., 20-n, and the service termination unit circuit cards 22-1,..., 22-p, a multi-line communications bus 38 (FIG. 3C) is provided on the centerplane board 24. Each of the controller circuit card 26, the line termination unit circuit cards 20-1,..., 20-n, and the service termination unit circuit cards 22-1,..., 22-p, is provided with a respective transceiver 28, 30 and 32 which is coupled to the communications bus 38 when the respective circuit card is mounted to the centerplane board 24.

Each of the service termination unit circuit cards 22-1,..., 22-p includes a memory which contains a map of all the connections through the switch matrix portion on the respective service termination unit circuit card, and the controller circuit card 26 includes a memory which contains a map of all of the connections in the entire cable management system within the enclosure 10. The management station 14 issues commands to the circuitry on the controller circuit card 26. These commands include a connect command to make a connection between one or more specified service lines 16 and one or more specified user lines 18, and a disconnect command to open a connection between a specified one of the service lines 16 and a specified one of the user lines 18. The circuitry on the controller circuit card 26 places each appropriate command onto the communications bus 38 on the centerplane board 24, from which it is received by the transceiver 32 on the specified one of the service termination unit circuit cards 22-1,..., 22-p, which then controls its respective switch matrix portion in accordance with the received command to either make or open the specified connection.

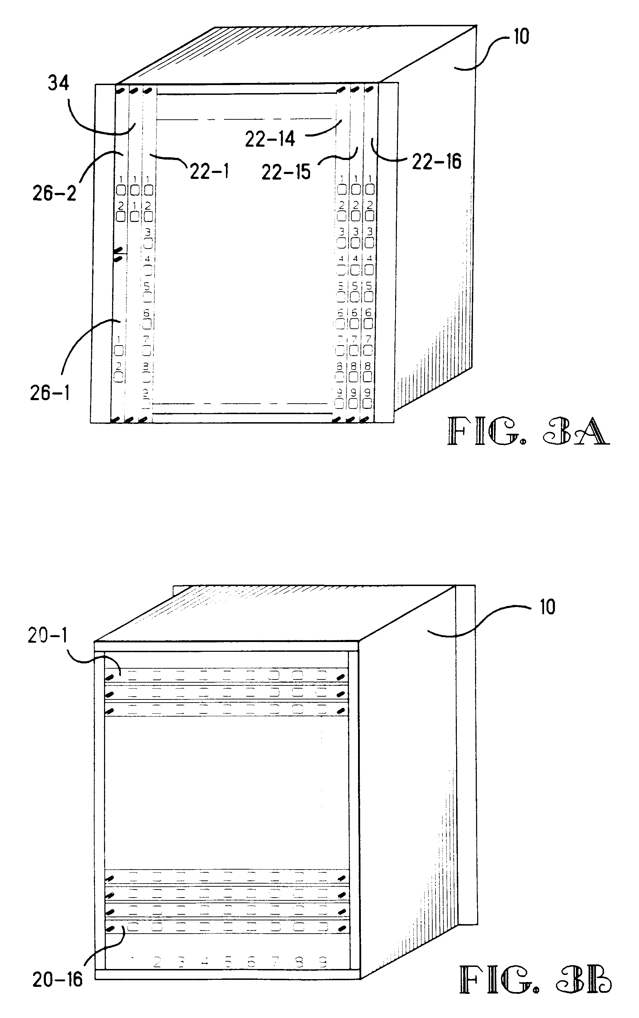

As shown in FIG. 3A, there are illustratively sixteen service termination unit circuit cards 22-1,..., 22-16 which are installed vertically in the enclosure 10 from the rear thereof. In addition, the controller circuit card 26, which is comprised of two half-cards 26-1 and 26-2, is also installed vertically, as is a line test card 34, the function of which will be described hereinafter as it pertains to an illustrative embodiment of this invention. As shown in FIG. 3B, there are illustratively sixteen line termination unit circuit cards 20-1,..., 20-16 which are installed horizontally in the enclosure 10 from the front thereof. Each of the line termination unit circuit cards 20-1,..., 20-16 and the service termination unit circuit cards 22-1,..., 22-16 has eight ports terminated by a respective media-specific connector on the visible edge of the circuit card away from the centerplane board 24 for connection to a respective user or service line. In addition, each of the line termination unit circuit cards 20-1,...20-16 and the service termination unit circuit cards 22-1,..., 22-16 has a ninth port connector used for the testing function, as will be described hereinafter.

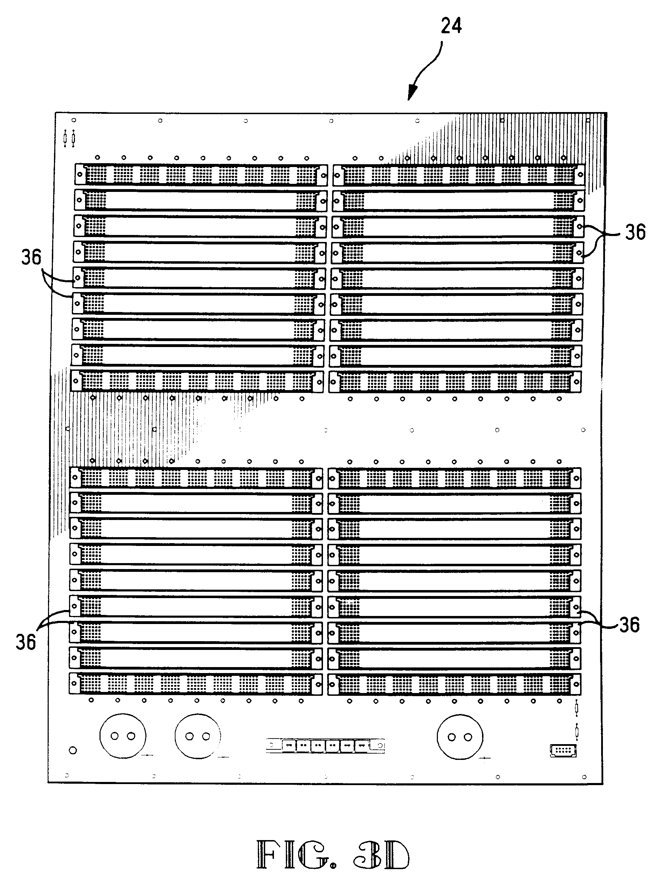

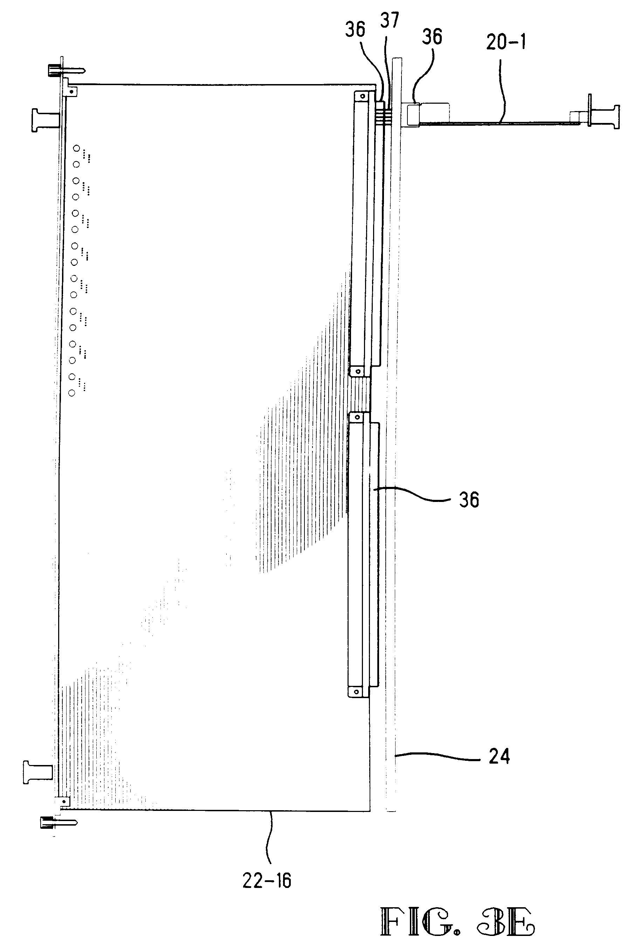

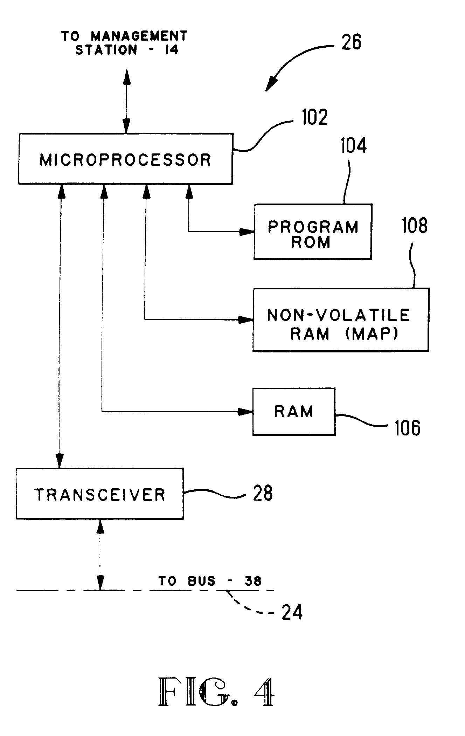

FIGS. 3C and 3D illustrate opposite sides of the centerplane board 24. Specifically, FIG. 3C shows the side of the centerplane board 24 on which the service termination unit circuit cards, the controller circuit cards, and the line test card are mounted and FIG. 3D shows the side of the centerplane board 24 on which the line termination unit circuit cards are mounted. Thus, as shown in FIG. 3C, for each of the service termination unit circuit cards, the controller circuit cards and the line test card there is provided a pair of vertically oriented card edge connectors 36. Likewise, as shown in FIG. 3D, on the other side of the centerplane board 24 there is provided for each of the line termination unit circuit cards a pair of horizontally oriented card edge connectors 36. (The top and bottom rows of connectors 36 are not utilized.) Each of the card edge connectors 36 has within it nine fields, each of which includes thirty six pins 37 (FIG. 3E) arranged in a square 6x6 matrix. The pins extend through the centerplane board 24 to a corresponding field in one of the card edge connectors 36 on the other side of the board 24, thereby interconnecting the connectors 36 on both sides of the board 24.

Illustratively, each of the service termination unit circuit cards 22-1,..., 22-16 and the line termination unit circuit cards 20-1,..., 20-16 has eight input/output ports. Each of these ports is a four wire port and each of the four wires of each port of the line termination unit circuit cards is connected to each of sixteen of the pin fields in the pair of connectors 36 to which its card is connected. This accounts for 8 x 4 = 32 of the thirty six pins of each field. The remaining four pins in each of those sixteen pin fields are reserved for power, ground and control signals. Similarly, each of the four wires of a service termination unit circuit card port is connected to the switch matrix portion on that service termination unit circuit card. The outputs of each service termination unit circuit card's switch matrix portion are eight 4-wire bundles which are each connected to four pins of each of sixteen of the pin fields of the connector 36 associated with that service termination unit circuit card. Again, that accounts for thirty two of the thirty six pins in each of those sixteen pin fields, with the remaining four pins being reserved for the same power, ground and control signals.

Because of the orthogonal relationship of the connectors 36 on both sides of the centerplane board 24, every port of a line termination unit circuit card is connected to a pin field connected to every one of the service termination unit circuit cards on the other side of the centerplane board 24. Thus, FIG. 3E illustrates how the line termination unit circuit card 20-1 is connected to a pin field of the service termination unit circuit card 22-16, as well as to all corresponding pin fields of all the other fifteen service termination unit circuit cards. As shown in FIG. 3E, the pins 37 (a square 6x6 array) connect the card edge connectors 36 on the two sides of the centerplane board 24 at their intersections (i.e., at their common pin fields). Illustratively, the line termination unit circuit cards 20-1,..., 20-16 take up the second through the seventeenth rows of the horizontal connectors 36 on their side of the centerplane board 24. The top and bottom rows are vacant. Similarly, the service termination unit circuit cards 22-1,..., 22-16 take up the third through the eighteenth columns of the vertical connectors 36 on their side of the board 24. Thus, through the switch matrices on the service termination unit circuit cards, any one of the service lines 16 can be connected to any one of the user lines 18. In the illustrative embodiment, there are sixteen service termination unit circuit cards, each with eight ports, for a total of 128 service ports and there are sixteen line termination unit circuit cards, each having eight ports, for a total of 128 user ports. Each switch matrix portion on a service termination unit circuit card is an eight port by 128 port (32 by 512 lines) matrix of crosspoints. Thus, as disclosed, each of the 128 service lines can be connected to each of the 128 user ports.

As shown schematically in FIG. 3C, there is a multi-wire communications bus 38 on the centerplane board 24. The bus 38 extends parallel to the leftmost column of the vertical connectors 36 and parallel to the upper row of the horizontal connectors 36 (not shown in FIG. 3C) on the other side of the board 24. In order that the transceivers 28, 30 and 32 may be interconnected, along with the transceiver on the line test card 34, the bus 38 is terminated at the pin fields in the second through seventeenth rows of the leftmost column for connection to the transceivers 30 on all of the line termination unit circuit cards 20-1,..., 20-16; at the upper pin fields in the second through eighteenth columns for connection to the transceiver on the line test card 34 and to the transceivers 32 on all of the service termination unit circuit cards 22-1,..., 22-16; and at the upper pin field of the first column for connection to the transceiver 28 on the controller circuit card 26.

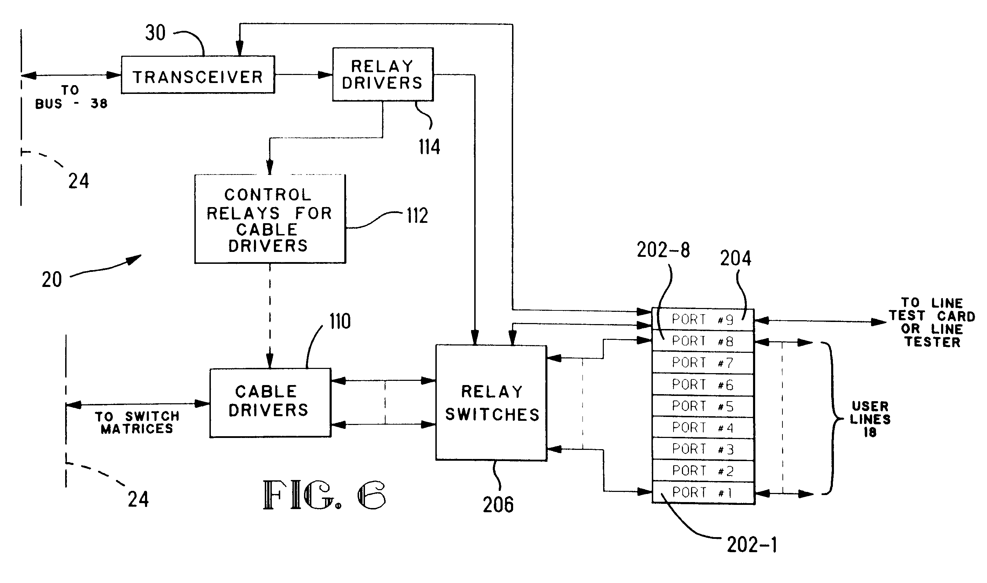

FIG. 4 illustrates circuitry on the controller circuit card 26 which may be utilized in the cable management system with which the present invention is concerned. The controller 26 includes a microprocessor 102 which is associated with three different types of memory. The first type of memory is a program read only memory (ROM) 104 which has stored therein the program instructions for operating the microprocessor 102. The microprocessor 102 is also associated with a random access memory (RAM) 106 which is utilized as a temporary storage memory by the microprocessor 102. Lastly, there is a non-volatile random access memory 108 which is utilized to store a map showing all of the connections through the switch matrix portions on the service termination unit circuit cards 22-1,..., 22-16 as well as information as to what type of card is installed in each of the connectors 36. The non-volatile RAM 108 may be an electrically erasable PROM or a "flash" PROM which saves its contents even when power is lost. Since it takes a relatively long time to write information into the non-volatile RAM 108, the RAM 106 is used to temporarily store the map until such time as it is written into the non-volatile RAM 108.

The microprocessor 102 is coupled to the management station 14 in any suitable manner, such as by an RS-232 link or a modem, or through a local area network. The microprocessor 102 receives commands from the management station 14, such as a connect command or a disconnect command as described above, and in accordance with the program stored in the ROM 104 transmits instructions over the bus lines 38 on the centerplane board 24 via the transceiver 28. Illustratively, the transceiver 28 is a Neuron chip manufactured by Echelon Corp. The microprocessor 102 addresses a specified one of the service termination unit circuit cards 22-1,..., 22-16 over the bus 38 via the transceiver 28 and provides an appropriate instruction for controlling the switch matrix portion of that service termination unit circuit card. The microprocessor 102 receives acknowledgements of its instructions, which are returned over the bus 38 from the specified service termination unit circuit card, via the transceiver 28, and updates the map stored in the non-volatile RAM 108.

FIG. 5 illustrates the circuitry 22 on one of the service termination unit circuit cards 22-1,..., 22-16. This circuitry includes a microprocessor 116 having associated therewith three types of memory. There is a program ROM 118, a non-volatile RAM 120 and a RAM 122. These memories function similarly to the memories 104, 108 and 106, respectively, associated with the microprocessor 102 of the controller 26, but are specifically for the particular one of the service termination unit circuit cards 22-1,..., 22-16 with which they are associated. The microprocessor 116 is coupled to the transceiver 32, which is illustratively a Neuron chip manufactured by Echelon Corp. The transceiver 32 is coupled to the bus lines 38 on the centerplane board 24 and is utilized for communications between the microprocessor 116 and the microprocessor 102 on the controller circuit card 26. Instructions received by the microprocessor 116 via the transceiver 32 over the bus 38 from the microprocessor 102 are utilized to control the relay drivers 124 and the switch matrix 126. Interfacing between the service lines 16 and the switch matrix 126 is effected via service line circuit paths which include the cable drivers (amplifiers) 130. The relay drivers 124 set the control relays 128 so that the cable drivers 130 interposed between the service lines 16 and the switch matrix 126 are "pointing" in the proper directions. At system start-up, for safety reasons the cable drivers 130 are initially bypassed. The switch matrix 126 is connected to all of the line termination unit circuit cards 20-1,..., 20-16 mounted on the other side of the centerplane board 24, as previously described, so that any one of the service lines 16 entering that particular service termination unit circuit card may be connected to any one of the user lines 18. In accordance with instructions received from the microprocessor 102 on the controller circuit card 26, the microprocessor 116 controls the switch matrix 126 to make an appropriate physical electrical connection therethrough between a specified one of the service lines 16 entering that card and a specified one of the user lines 18 entering any one of the line termination unit circuit cards 20-1,..., 20-16 on the other side of the centerplane board 24.

The line termination unit circuit card 20 illustrated in FIG. 6 includes the transceiver 30 coupled to the bus lines 38 on the centerplane board 24. Illustratively, the transceiver 30 is a Neuron® chip manufactured by Echelon Corp. The function of the line termination unit circuit card 20 is to provide interfaces between the user lines 18 and the switch matrices on the service termination unit circuit cards 22-1,..., 22-16 mounted on the other side of the centerplane board 24. This interfacing takes place via user line circuit paths which include the cable drivers (amplifiers) 110. The cable drivers 110 are selectively controllable to pass signals either from individual ones of the service lines 16 to individual ones of the user lines 18 or in the reverse direction from individual ones of the user lines 18 to individual ones of the service lines 16, as determined by the settings of respective ones of the control relays 112. The control relays 112 are controlled by the relay drivers 114 which are operated on the basis of instructions received via the transceiver 30 from the microprocessor 102 of the controller 26 over the bus lines 38 on the centerplane board 24. Initially, all the cable drivers 110 are set to pass signals in the direction from the user lines 18 to the service lines 16, with the cable drivers being bypassed. This is for safety reasons so that upon system start-up dangerously high amplified signals are not inadvertently transmitted to the user lines 18, where they could damage sensitive equipment.

According to the present invention, the equipment for testing the user lines 18 and the service lines 16 can either be incorporated in an enclosure separate from the enclosure 10 (e.g., as a handheld unit) or be permanently installed within the enclosure 10. In either case, the line testing equipment is illustratively similar to the MT350 Scanner manufactured by MicroTest of Phoenix, Arizona. Such a device is described in U.S. Patent No. 4,970,466, the contents of which are hereby incorporated by reference herein. This patent discloses a handheld unit, which may be modified for mounting on a circuit card when permanently installed within the enclosure 10. The tester disclosed in the referenced patent is capable of selectively evaluating various characteristics of a line connected to its output port. For example, the tester can determine the length of a line, its capacitance and its resistance. It can also evaluate the near end crosstalk of a line, its attenuation characteristics at various frequencies and the noise on a line within various frequency bands. Further, the tester can also be controlled to automatically run a combination of these tests.

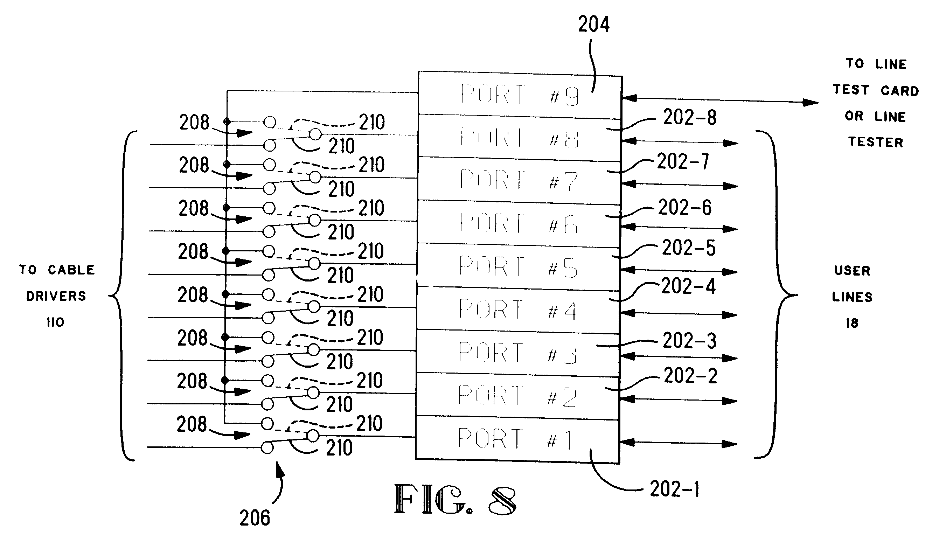

To accommodate the user line testing function, each of the line termination unit circuit cards 20, in addition to having eight user line port connectors 202-1,..., 202-8, has a test port connector 204 for receiving a connection to the tester. In order to be able to connect a selected one of the user lines 18 to the line tester, there is provided a bank of switches 206. The switches 206 are connected to the user line port connectors 202-1,..., 202-8, the test port connector 204 and the cable drivers 110. Although single lines are shown, it is understood that each "line" includes a number of wires, illustratively four. As is shown more clearly in FIG. 8, the bank of switches 206 includes a plurality of individual switches 208 each having an armature 210. Although individual single pole switches are shown, it is understood that these are actually multi-pole switches to accommodate multi-wire lines. The armatures 210 are each controlled by a relay coil (not shown) which is selectively energized by the relay drivers 114 (FIG. 6) which are operated on the basis of instructions received from the transceiver 30, as will be described hereinafter. As shown in FIG. 8, with the armatures 210 in the position shown by the solid line, each of the user line port connectors 202-1,..., 202-8, is connected to a respective one of the cable drivers 110. When an armature 210 is in the position shown by the broken line, the user line port connector associated with that particular one of the switches 208 is connected to the test port connector 204 so that the particular user line can be evaluated.

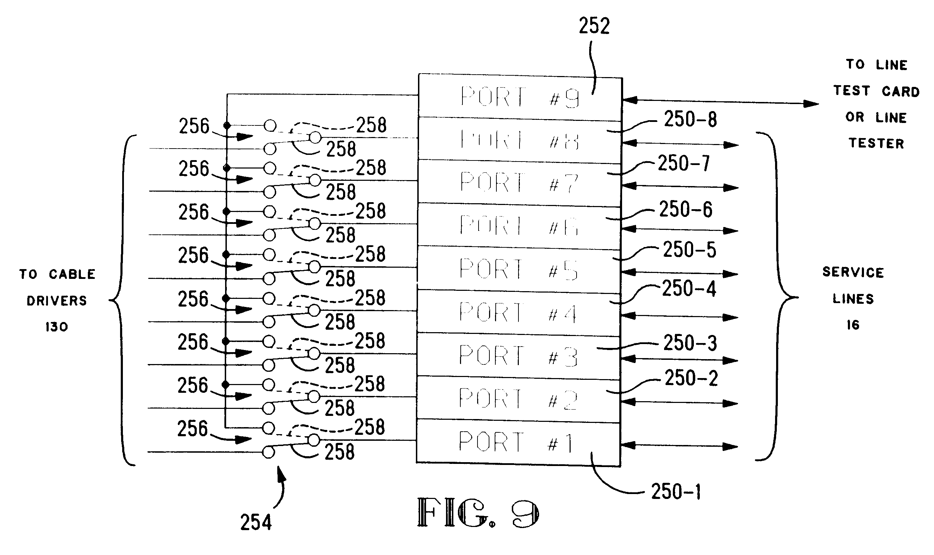

To accommodate the service line testing function, each of the service termination unit circuit cards 22, in addition to having eight service line port connectors 250-1,..., 250-8, has a test port connector 252 for receiving a connection to the tester. In order to be able to connect a selected one of the service lines 16 to the line tester, there is provided a bank of switches 254. The switches 254 are connected to the service line port connectors 250-1,..., 250-8, the test port connector 252 and the cable drivers 130. Although single lines are shown, it is understood that each "line" includes a number of wires, illustratively four. As is shown more clearly in FIG. 9, the bank of switches 254 includes a plurality of individual switches 256 each having an armature 258. Although individual single pole switches are shown, it is understood that these are actually multi-pole switches to accommodate multi-wire lines. The armatures 258 are each controlled by a relay coil (not shown) which is selectively energized by the relay drivers 124 (FIG. 5) which are operated on the basis of instructions received from the transceiver 32, as will be described hereinafter. As shown in FIG. 9, with the armatures 258 in the position shown by the solid line, each of the service line port connectors 250-1,..., 250-8, is connected to a respective one of the cable drivers 130. When an armature 258 is in the position shown by the broken line, the service line port connector associated with that particular one of the switches 256 is connected to the test port connector 252 so that the particular service line can be evaluated.

When the line tester is a handheld unit, as disclosed in the referenced patent, and a technician wishes to evaluate a particular one of the user lines 18 or the service lines 16, the technician connects the line tester, via a cable, to the test port connector 204 or 252 on that one of the line termination unit circuit cards 20 or the service termination unit circuit cards 22 to which the line being evaluated is connected. By means of the keyboard on the handheld line tester, the technician communicates with the controller 26 via the transceiver 30 or 32 and the bus 38, to cause the controller 26 to send an instruction to open all connections through the switch matrix 126 to the particular one of the lines 18 or 16 which is to be evaluated. If a service line is being tested, the service provider is notified (e.g., by a telephone call) so that no signals are applied to the service line which would interfere with the testing. The technician then sends a command through the transceiver 30 or 32 to the relay drivers 114 or 124 to cause the particular one of the switches 208 or 256 which is associated with the line port connector associated with the particular line to move its armature 210 or 258 so that that line port connector is connected to the test port connector 204 or 252. After the particular line is evaluated, the evaluation results are transmitted to the controller 26 via the transceiver 30 or 32 and the bus 38. The particular switch 208 or 256 associated with that line is then caused to move its armature 210 or 258 so that the line port connector 202 or 250 is connected to one of the cable drivers 110 or 130, and then any desired connection through the switch matrix 126 may be effected.

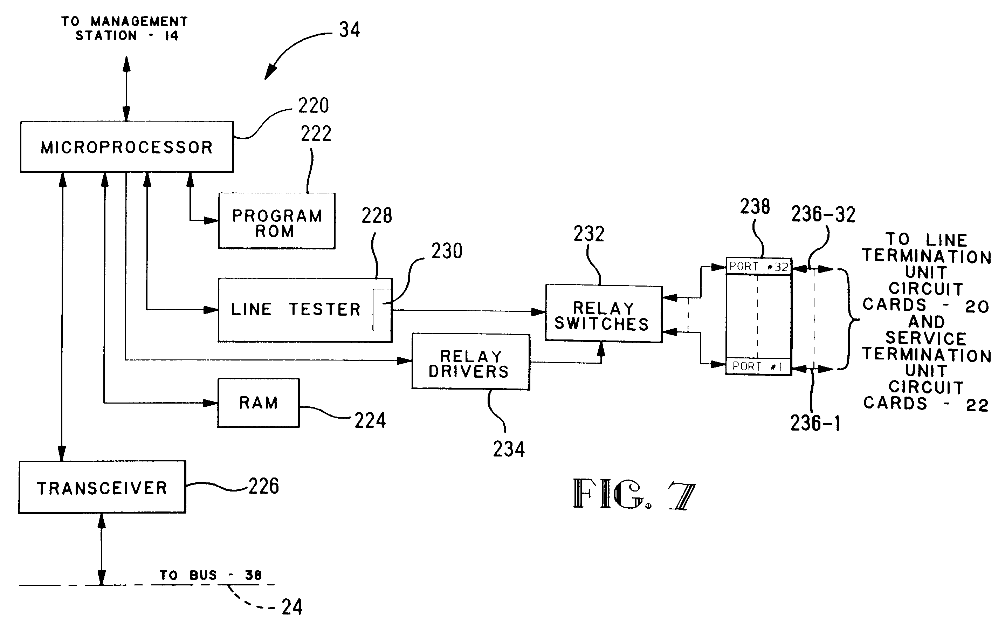

According to this invention, the line tester may be permanently installed within the enclosure 10. When this is the case, the line tester is illustratively mounted to the line test card 34 as shown in FIG. 7. Thus, the line test card 34 includes a microprocessor 220 having associated therewith a program ROM 222 and a RAM 224. The memories 222 and 224 function similarly to the memories 104, 106, respectively, associated with the microprocessor 102 of the controller 26, but are specifically for the line test card 34. The microprocessor 220 is coupled to the transceiver 226, which is illustratively a Neuron chip manufactured by Echelon Corp. The transceiver 226 is coupled to the bus lines 38 on the centerplane board 24 and is utilized for communications between the microprocessor 220 and the other circuit cards in the enclosure 10. Also mounted on the line test card 34 is a line tester 228, which is substantially identical, at least as far as its circuitry is concerned, with the tester disclosed in the referenced patent, but is modified for mounting on the line test card 34 rather than within a handheld enclosure. The line tester 228 is controlled by the microprocessor 220 in accordance with instructions received from the management station 14, to which it is coupled in any suitable manner, such as by an RS-232 link or a modem, or through a local area network. The line tester 228 has its output port 230 connected to the bank of relay switches 232, which are controlled from the microprocessor 220 through the relay drivers 234. The relay switches 232 are arranged similarly to the switches 206 shown in FIG. 8 and the switches 254 shown in FIG. 9. However, there are illustratively thirty two individual switches within the switch bank 232, each of which corresponds to a respective one of the line termination units circuit cards 20-1,...20-16 and the service termination unit circuit cards 22-1,..., 22-16. Each of the switches within the switch bank 232 is connected to a respective test port connector 204, 252 on a respective line or service termination unit circuit card by one of the test cables 236-1,..., 236-32 which are each connected to a respective connection port 238 on the line test card 34. So that there are no disparities when testing the user lines, all of the test cables 236 are substantially identical, at least as to length and gauge.

When a particular line is to be evaluated by the line test card 34, the system operator at the management station 14 sends a command to the controller 26 to disconnect the selected line from any other line to which it had been connected. If a service line is being tested, the service provider is notified, as discussed above. The management station 14 then causes the microprocessor 220 on the line test card 34 to control the appropriate one of the relay drivers 234 to actuate the appropriate one of the switches 232 so that the line tester 228 is connected to the appropriate one of the termination unit circuit cards 20, 22. The microprocessor 220 also sends a command via the transceiver 226 and the bus 38 to the transceiver 30 or 32 on that termination unit circuit card to actuate the appropriate one of the switches 206 or 254 to connect the test port connector 204 or 252 to the appropriate one of the line port connectors 202 or 250 associated with the selected user or service line. After that line is evaluated, the line tester 228 transmits the evaluation results to the microprocessor 220 for transmission to the management station 14.

In addition to testing the user lines 18 and service lines 16 when a problem surfaces or for routine maintenance purposes, testing of the lines can be done upon initial system installation to develop an "as built" data base of user line characteristics.

Only a single embodiment of each of the termination unit circuit cards 20 and 22 has been shown (FIGS. 5 and 6). These embodiments are specifically for the case where the line tester is separate from the cable management system and must communicate directly with the controller 26. For the case where the line tester is mounted on the line test card 34, the wires between the test port connector 204 or 252 and the transceiver 30 or 32 on the termination unit circuit card 20 or 22 may be eliminated or, for uniformity of card manufacture, may remain but are not utilized.

Accordingly, there has been disclosed an improved cable management system for providing connections between service lines and user lines, and which has the capability of testing the user and service lines in a single-ended manner from the cable management system without disconnecting any of the user or service lines from the cable management system. While illustrative embodiments of the present invention have been disclosed herein, it is understood that various modifications and adaptations to the disclosed embodiments will be apparent to those of ordinary skill in the art and it is intended that this invention be limited only by the scope of the appended claims.

The details of the LTU cards schematics for a fixed Ethernet version and the STU cards schematics for a fixed Ethernet version and the Controller A card schematics and a 15 Volt power supply schematics are attached in microfiche Appendix I. The details for a universal version, i.e. non-Ethernet version, are in additional drawings and a bill of materials, which are attached in microfiche Appendix II.

## Claims

1. A tester in a cable management system comprising, multiple communications service lines interconnected to multiple communications user lines,
characterised by;
multiple STU (service termination unit) cards (22),
service line port connectors (250-1,...., 250-8) on respective STU cards (22) connected to the respective multiple service lines (16),
multiple LTU (line termination unit) cards (20),
a connecting unit (24, 36, 37) interconnecting each of the STU cards (22) to every one of the LTU cards (20),
user line port connectors (202) on the LTU cards (20) connected by the connecting unit (24, 36, 37) to each of the STU cards (22), the user line port connectors (202) being adapted to be connected to the respective multiple user lines (18),
switches (126) on each STU card (22), each switch (126) connecting one of the respective multiple service lines (16) selectively to one of among many of the user line port connectors (202),
a service line tester (228),
test port connectors (252) on respective STU cards (22) connected to the service line tester (228), and
selectively actuated switches (256) on respective STU cards (22) connecting respective test port connectors (252) selectively to one of the service line port connectors (250-1,...., 250-8) on the respective STU cards (22).

2. A tester as recited in claim 1, further characterised in that;
the tester (228) is a hand held unit in one of the test port connectors (252) activating a corresponding switch (256) to connect said one of the test port connectors (252) selectively to one of the service line port connectors (250-1,...., 250-8) for testing a service line (16).

3. A tester as recited in claim 1, further
characterised in that;
a line test card (34) comprises, the tester (228), switches (232) connected to an output port (230) of the tester (228), each of the switches being connected to one of the test port connectors (204) on one of the STU cards (20), and a microprocessor (220) to actuate one of the switches (232) for connecting one of the test port connectors (204) to the output port (230 ) of the tester (228), and the microprocessor (220) actuating one of the switches (254) to connect the test port connector (252) to a service line (16).

4. A tester in a cable management system comprising, multiple communications service lines interconnected to multiple communications user lines,
characterised by;
multiple STU (service termination unit) cards (22) connected to respective multiple service lines (16),
multiple LTU (line termination unit) cards (20),
a connecting unit (24, 36, 37) interconnecting each of the STU cards (22) to every one of the LTU cards (20),
user line port connectors (202) on the LTU cards (20) connected by the connecting unit (24, 36, 37) to each of the STU cards (22), the user line port connectors (202) being adapted to be connected to respective multiple user lines (18),
switches (126) on each STU card (22), each switch (126) connecting one of the respective multiple service lines (16) selectively to one of among many of the user line port connectors (202),
a line tester (228),
test port connectors (204) on respective LTU cards (20) connected to the user line tester (228), and
selectively actuated switches (206) on respective LTU cards (20) connecting respective test port connectors (204) selectively to one of the user line port connectors (202) on the respective LTU cards (20).

5. A tester as recited in claim 4, further characterised by;
user line circuit paths (110) on respective LTU cards (20) interconnecting respective user line port connectors (202) and the connecting unit (24, 36, 37), and the switches (206) on respective LTU cards (20) connecting respective test port connectors (204) selectively through one of the user line circuit paths (110) to one of the user line port connectors (202).

6. A tester as recited in claim 4, further characterised in that;
the tester (228) is a hand held unit in one of the test port connectors (204) activating a corresponding switch (206) to connect said one of the test port connectors (204) selectively to one of the user line port connectors (202) for testing a user line (18).

7. A tester as recited in claim 4, further characterised in that;
a line test card (34) comprises, the tester (228), switches (232) connected to an output port (230) of the tester (228), each of the switches being connected to one of the test port connectors (204) on one of the STU cards (20), and a microprocessor (220) to actuate one of the switches (232) for connecting one of the test port connectors (204) to the output port (230) of the tester (228), and the microprocessor (220) actuating one of the switches (206) to connect the test port connector (252) to a user line (18).
